# EUROPÄISCHE PATENTSCHRIFT

(11) **EP 3 202 668 B1**
(45) Veröffentlichungstag und Bekanntmachung des Hinweises auf die Patenterteilung: **04.11.2020**
(21) Anmeldenummer: 16187620.6
(22) Anmeldetag: 07.09.2016
(51) Int. Cl.: B64F 1/31

(54) **ZUGANGSEINRICHTUNG ZU EINEM FLUGZEUG**
ACCESS DEVICE TO AN AIRCRAFT
DISPOSITIF D'ACCÈS À UN AVION

(30) Priorität: 04.02.2016 DE 102016001273
(43) Veröffentlichungstag der Anmeldung: 09.08.2017
(73) Patentinhaber: Hübner GmbH & Co. KG, 34123 Kassel (DE)
(72) Erfinder: Gutkuhn, Detlef, 34314 Espenau (DE); Scharf, Lothar, 37242 Bad Sooden-Allendorf (DE); Hübner, Reinhard, 34130 Kassel (DE)
(74) Vertreter: Patentanwälte Walther Hinz Bayer PartGmbB

(56) Entgegenhaltungen:
- EP-A2- 0 256 976
- EP-A2- 2 003 086
- DE-U1- 8 815 054
- FR-A- 921 163
- Anonymous: "Tunnel container sale or hire - Containers with double end doors", , 13 April 2015 (2015-04-13), XP055577216, Retrieved from the Internet: URL:https://web.archive.org/web/2015041307 2545/https://adaptainer.co.uk/tunnel-conta iner/ [retrieved on 2019-04-03]
- Anonymous: "Portable Loading Ramps and Platforms - HandiRamp", , 11 September 2015 (2015-09-11), XP055577279, Retrieved from the Internet: URL:http://web.archive.org/web/20150911044 759/https://www.handiramp.com/yardramps/po rtable-loading-platforms.htm [retrieved on 2019-04-03]

## Beschreibung

Die Erfindung betrifft eine als für ein Flugzeug, Bus oder Gebäude bestimmte Zugangseinrichtung umfassend ein Fahrzeug sowie eine mit dem Fahrzeug verbundene Ladefläche, wobei auf der Ladefläche eine Schutzeinrichtung für Passagiere angeordnet ist.

Aus "Tunnel container sale or hire - Containers with double end doors" (Herausgeber: Anonymous), 13. April 2015 (2015-04-13), XP055577216 (URL:https://web.archive.org/web/20150413072545/https://adaptainer.co.uk /tunnel-container) ist ein Container bekannt, der zu beiden Enden geöffnet werden kann.

Die "Portable Loading Ramps and Platforms - HandiRamps" (Herausgeber: Anonymous), 11. September 2015 (2015-09-11), XP055577279 (URL:http://web.archive.org/web/20150911044759/https://www.handiramp. com/yardramps/portable-loading-platforms.htm) beschreibt eine Laderampe für ein Gebäude, die verfahrbar ist.

Aus dem Stand der Technik sind sogenannte Zugangstunnel zu einem Flugzeug bekannt, beispielsweise von einem parkenden Bus oder einem Gebäudeteil aus. Solche Zugangstunnel werden eingesetzt, wenn Passagieren der Zugang von einem zum Rollfeld ebenerdig gelegenen Ausgang, beispielsweise eines Gebäudes, zum Flugzeug ermöglicht werden soll, ohne Witterungseinflüssen ausgesetzt zu sein.

Aus dem Stand der Technik gemäß der PCT/DE 2013/000513 ist ein Zugangstunnel bekannt, der mehrere Tunnelelemente aufweist, wodurch der Zugangstunnel an die erforderliche Länge anpassbar ist. Im Einzelnen ist aus dieser Literaturstelle bekannt, dass, um die einzelnen Tunnelelemente gegen Verschmutzungen und auch gegen Witterungseinflüsse insgesamt zu schützen, zwei Tunnelelemente ineinander verschoben werden. Des Weiteren ist hierbei vorgesehen, dass ein im Wesentlichen starres Tunnelelement als Grundelement mindestens ein weiteres ziehharmonikaförmiges Tunnelelement zur Verlängerung aufweist, wobei das im Wesentlichen starre Tunnelelement als Grundelement das ziehharmonikaförmige Tunnelelement nach Art einer Garage in sich aufnehmen kann.

Aus der FR 28 86 624 A ist ein Zugangstunnel zu einem Flugzeug bekannt, der sowohl mehrere teleskopierbare Tunnelelemente als auch endseitig zwei starre Tunnelelemente aufweist, die als Führungselemente beim Verfahren des Zugangstunnels dienen sollen. Somit ist der dort beschriebene Zugangstunnel in seiner Länge variabel. Das heißt, der Platzbedarf des Zugangstunnels auf dem Rollflughafenvorfeld ist veränderbar.

Aus der WO 01/88287 ist ebenfalls ein Zugangstunnel zu einem Flugzeug bekannt, wobei einzelne Tunnelelemente teleskopierbar miteinander in Verbindung stehen. Nachteilig hierbei ist, dass wenn eine Mehrzahl derartiger Tunnelelemente teleskopierbar miteinander in Verbindung stehen, die lichte Durchgangsweite über die Länge der Tunnelelemente immer weiter abnimmt. Das heißt, die Anzahl der in solcher Weise verbundenen Tunnelelemente ist durchaus beschränkt. Darüber hinaus hat sich weiterhin als nachteilig herausgestellt, dass bedingt durch die Führung der einzelnen Tunnelelemente ineinander ein erheblicher Kraftbedarf erforderlich ist, um die einzelnen Tunnelelemente zur Bildung des Zugangstunnels auseinander zu ziehen. Dies deshalb, weil, wie bereits ausgeführt, die Gestelle der einzelnen Tunnelelemente miteinander geführt in Verbindung stehen.

Des Weiteren ist nachteilig bei all den zuvor beschriebenen Zugangstunneln, dass diese beim Transport über das Rollfeld schwer zu handhaben sind, und zwar in dem Sinne, dass aufgrund des geringen Durchmessers der Rollen der Tunnelelemente, die den Zugangstunnel bilden, diese beim Verfahren schwierig auf dem Flugzeugvorfeld zu führen sind.

Aus der EP 2 003 086 A9 ist ein Fahrzeug bekannt, das eine durch eine Hubeinrichtung anhebbare, in der Länge teleskopierbare Kabine aufweist, die an dem einen vorderen Ende über ein Faltenvordach zur Anlage im Bereich eines Zustiegs eines Flugzeugs aufweist. Die Kabine, die den Zugang zum Flugzeug ermöglicht, ist zum einen zugänglich über eine Treppe, und zum anderen zugänglich über eine gesonderte Hubeinrichtung. Insofern besteht sowohl für gehandicapte Personen, also z. B. Rollstuhlfahrer, als auch für gesunde Personen die Möglichkeit, diese Kabine vom Boden aus zu erreichen, um in das Flugzeug zu gelangen. Sowohl der Treppenaufgang als auch die Hubeinrichtung sind Bestandteil des Fahrzeugs, das auch die höhenverstellbare und teleskopierbare Kabine aufnimmt.

Dokumente EP0256976 und DE8815054U1 offenbaren teleskopierbare Fahrtreppen, die auf eine Ladefläche transportierbar und von der Ladefläche verfahrbar sind.

Die der Erfindung zugrunde liegende Aufgabe besteht demzufolge darin, insbesondere eine Mehrzahl der einen Zugangstunnel bildenden Tunnelelemente problemlos auf dem Rollfeld oder Flughafenvorfeld an jede beliebige Stelle transportieren zu können.

Zur Lösung der Aufgabe ist vorgesehen, dass die Schutzeinrichtung mehrere verfahrbare, teleskopartig ineinander lagerbare Tunnelelemente umfasst, die auf der Ladefläche transportierbar und von der Ladefläche verfahrbar sind. Weiter sind die Tunnelelemente konisch ausgebildet.

Hierdurch wird die Möglichkeit eröffnet, die Schutzreinrichtung, die nach einem Merkmal der Erfindung mehrere, insbesondere durch Rollen, verfahrbare Tunnelelemente umfasst, zunächst auf der Ladefläche an den vorgesehenen Ort zu verfahren, beispielsweise zu einem Flugzeug, um dann die einzelnen Tunnelelemente von der Ladefläche zu verfahren und einen Zugangstunnel zwischen beispielsweise dem Flughafenbus und dem Flugzeug zu schaffen.

Die Tunnelelemente sind auf der Ladefläche teleskopartig ineinander lagerbar, was insbesondere dadurch bewerkstelligt werden kann, dass die Tunnelelemente selbst konisch ausgebildet sind. Hieraus wird deutlich, dass mithilfe einer Zugangseinrichtung, wie sie eingangs beschrieben worden ist, problemlos eine Vielzahl von Tunnelelementen an jede beliebige Stelle des Flughafenvorfeldes transportiert werden kann, um diese dort an Ort und Stelle auseinanderziehen zu können, mithin hierdurch einen Zugangstunnel zu bilden.

Nach einem weiteren vorteilhaften Merkmal ist vorgesehen, dass das Fahrzeug als selbstfahrendes Fluggasttreppenfahrzeug ausgebildet ist. Das heißt, dass das Fluggasttreppenfahrzeug über eine Ladefläche verfügt, auf der sich eine Schutzeinrichtung befindet, die mindestens ein, vorzugsweise allerdings mehrere Tunnelelemente umfasst. Hieraus wird weiterhin deutlich, dass sich der Zugangstunnel, gebildet aus den einzelnen Tunnelelementen, beispielsweise zwischen dem Flughafenbus und der Fluggasttreppe, erstreckt.

Die Ladefläche kann hierbei nach einer ersten Ausführungsform frei auskragend an dem Fahrzeug angeordnet sein.

Nach einer Variante zu der ersten Ausführungsform ist des Weiteren vorgesehen, dass die Ladefläche an dem Fahrzeug horizontal, insbesondere um 180° horizontal verschwenkbar, anbringbar ist. Dies vor folgendem Hintergrund. Bei kleineren Flugzeugen erfolgt das Besteigen des Flugzeugs üblicherweise über die im Flugzeug vorhandene Bordtreppe. Das heißt, dass dort aufgrund der Größenverhältnisse eine Fluggasttreppe nicht einsetzbar ist. Um dennoch ein Fluggasttreppenfahrzeug zum Transport der Schutzeinrichtung einsetzen zu können, und den Passagieren auch bei einem kleinen Flugzeug Zugang durch einen Zugangstunnel zum Flugzeug zu ermöglichen, ist vorgesehen, dass die Ladefläche um insbesondere 180° neben das Fahrzeug verschwenkbar ist. Wenn der Zugangstunnel sich neben dem Fluggasttreppenfahrzeug befindet, bedeutet dies, dass die Passagiere unmittelbar aus dem aus einzelnen Tunnelelementen ausgebildeten Zugangstunnel das Flugzeug, beispielsweise von einem Flughafenbus aus, erreichen können, ohne Witterungseinflüssen ausgesetzt zu sein.

In diesem Zusammenhang ist des Weiteren vorgesehen, dass die Ladefläche absenkbar ist, um ein Abrollen der einzelnen Tunnelelemente, die über Rollen verfügen, zu ermöglichen.

Gemäß einer weiteren zweiten Ausführungsform ist vorgesehen, dass die Ladefläche ein Fahrgestell aufweist, sodass die Ladefläche als Anhänger fungieren kann. Um auch hier die einzelnen Tunnelelemente von der Ladefläche verfahren zu können, ist vorgesehen, die Ladefläche absenkbar zu gestalten, und zwar insofern, als das Fahrgestell selbst absenkbar ist.

Als vorteilhaft hat sich des Weiteren herausgestellt, bei einer Mehrzahl von Tunnelelementen das vordere Tunnelelement auf der Ladefläche zu fixieren, sodass in einfacher Art und Weise insbesondere ineinander gelagerte Tunnelelemente zur Bildung des Zugangstunnels auseinandergezogen werden können.

Gemäß einer dritten Ausführungsform ist vorgesehen, dass das Fluggasttreppenfahrzeug eine Treppeneinrichtung aufweist, wobei die Treppeneinrichtung unter Schaffung eines Freiraums über der Ladefläche zumindest an einem Ende in der Höhe durch eine Hubvorrichtung verstellbar ist. Durch die Schaffung eines Freiraumes wird erreicht, dass während des Transports der Tunnelelemente auf dem Flughafenvorfeld die Tunnelelemente unter der Treppeneinrichtung gelagert werden können. Es ist also nicht erforderlich, wie nach der ersten und auch der zweiten Ausführungsform, dass eine gesonderte, beispielsweise verschwenkbare, Ladefläche vorgesehen ist, vielmehr kann sich die Ladefläche unmittelbar auf dem Fahrzeug befinden, wobei sich, wie bereits ausgeführt, zum Transport der Tunnelelemente die Tunnelelemente auf der Ladefläche örtlich gesehen unter der hochgestellten Treppeneinrichtung befinden. D. h., das Fahrzeug benötigt also z. B. keinen Hänger, ist also relativ kurz und insofern leicht zu manövrieren.

Nach einem Merkmal dieser dritten Ausführungsform ist vorgesehen, dass die Hubeinrichtung am hinteren Teil des Fluggasttreppenfahrzeugs angeordnet ist. Die Hubeinrichtung umfasst vorteilhaft zwei Hubsäulen, die die Treppeneinrichtung in der Höhe verschieblich geführt aufnehmen. Das Anheben des hinteren Endes der Treppeneinrichtung kann hierbei beispielsweise hydraulisch, pneumatisch oder auch rein mechanisch durch einen umlaufenden Kettentrieb in den Hubsäulen erfolgen. Am vorderen Ende, also dem dem Flugzeug zugewandten Ende kann die Treppeneinrichtung unter Berücksichtigung der Höhe der Fahrerkabine des Fahrzeugs bereits hochgestellt sein, in dem beispielsweise vorgesehen ist, dass die Treppeneinrichtung in diesem Bereich des Fluggasttreppenfahrzeugs auf einem Bock aufsitzt. Da unterschiedliche Flugzeugtypen die Zugangstüren in unterschiedlicher Höhe aufweisen, ist nach einem weiteren Merkmal der Erfindung vorgesehen, dass der Bock, auf dem das vordere Ende der Treppeneinrichtung lagert, in der Höhe verstellbar ist. Der Bock kann hierzu parallel zueinander angeordnet, am Fahrzeug angelenkte in der Länge veränderbare, insbesondere Teleskopstützen aufweisen, die durch eine Traverse verbunden sind. Die Traverse ist vorteilhaft um eine horizontale Achse verschwenkbar an den Teleskopstützen angeordnet.

Nach einem weiteren Merkmal der Erfindung ist vorgesehen, dass die Treppeneinrichtung im hinteren, zugangsseitigen Bereich mit einem Anschlusstreppensegment versehen ist. Das Anschlusstreppensegment ist hierbei teleskopierbar in der Treppeneinrichtung angeordnet, wodurch gewährleistet ist, dass durch Verlängerung der Treppeneinrichtung die Treppeneinrichtung an Flugzeugtypen mit unterschiedlich hohen Zugängen anpassbar ist.

Das Ausziehen oder Einziehen des Anschlusssegments aus der Treppeneinrichtung kann hierbei durch beispielsweise einen Zahnstangen- oder Kettentrieb erfolgen. Hierbei gleitet die Treppeneinrichtung auf der Traverse des Bocks. Alternativ kann ein Zahnstangen- oder Kettentrieb auch zwischen der Traverse des Bocks und der Unterseite der Treppeneinrichtung vorgesehen sein.

Nach einem weiteren Merkmal der Erfindung ist vorgesehen, dass die Treppeneinrichtung getunnelt ausgebildet ist, wobei gleichfalls auch das Anschlusstreppensegment bevorzugt getunnelt ist. Hierbei kann ein solches getunneltes Anschlusstreppensegment am absenkbaren Ende einen Anschlussrahmen aufweisen, der im abgesenkten Zustand der Treppeneinrichtung im Wesentlichen lotrecht verläuft, und der dem Anschluss eines auf dem Flughafenvorfeld stehenden Tunnelelementes dient, sodass ein im Wesentlichen spaltfreier Übergang zwischen der durch die Tunnelelemente gebildeten Schutzeinrichtung zu der getunnelten Treppeneinrichtung gebildet wird. Das heißt, dass die Passagiere, vor Witterungseinflüssen auch im Übergangsbereich zwischen der Treppeneinrichtung und der Schutzeinrichtung geschützt sind. Unter dem abgesenkten Zustand wird ein Zustand verstanden, in dem Personen die Treppeneinrichtung besteigen können.

Anhand der Zeichnungen wird die Erfindung nachstehend beispielhaft näher erläutert.
- Fig. 1: zeigt in schematischer Darstellung eine perspektivische Ansicht auf ein Fluggasttreppenfahrzeug, dass eine frei auskragende Ladefläche zur Aufnahme einer Schutzeinrichtung aufweist;
- Fig. 2: zeigt eine Seitenansicht auf das Fahrzeug gemäß Fig. 1;
- Fig. 3: zeigt eine Darstellung gemäß Fig. 1, bei der die Ladefläche abgesenkt ist;
- Fig. 4: zeigt ein Fluggasttreppenfahrzeug mit frei auskragender Ladefläche, wobei die Laderfläche seitlich um 180° an dem Fluggasttreppenfahrzeug verschwenkbar angelenkt ist;
- Fig. 5: zeigt eine Darstellung gemäß Fig. 4, bei der die einzelnen Tunnelelemente der Schutzeinrichtung bei abgesenkter und verschwenkter Position der Ladefläche zwecks Bildung eines Zugangstunnels auseinandergezogen sind;
- Fig. 6: zeigt ein Fluggasttreppenfahrzeug mit einem Anhänger, auf dem die Schutzeinrichtung umfassend mehrere Tunnelelemente lagert;
- Fig. 7: zeigt ein Fluggasttreppenfahrzeug mit unter einer Treppeneinrichtung angeordneter Schutzreinrichtung mit mehreren Tunnelelementen;
- Fig. 8: zeigt eine Darstellung gemäß Fig. 7, wobei das der Schutzeinrichtung zugewandte Ende der Treppeneinrichtung abgesenkt ist.

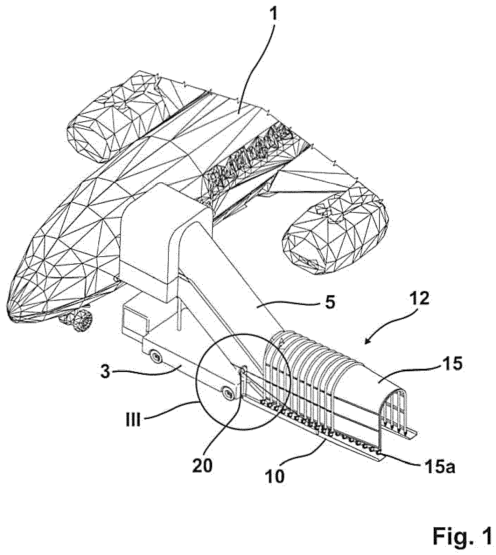

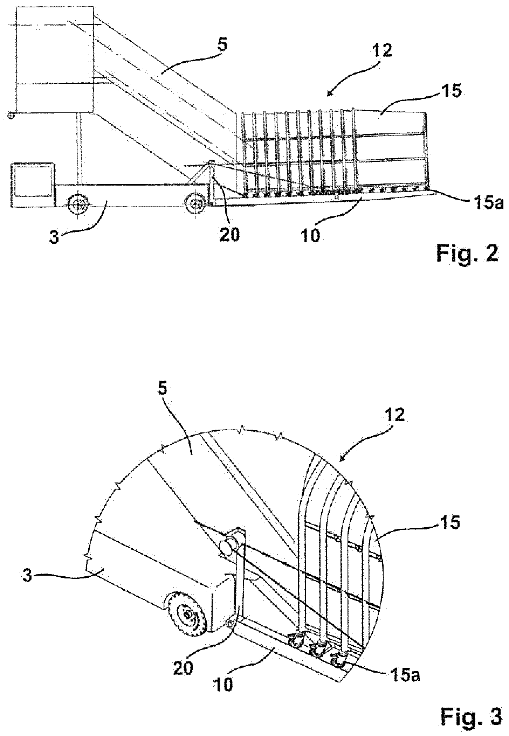

Gemäß den Figuren 1 bis 5 ist das Flugzeug mit 1 bezeichnet. An dem Flugzeug 1 angedockt ist das Fluggasttreppenfahrzeug 3 mit der Fluggasttreppe 5, wobei die Fluggasttreppe 5 den Zugang zum Flugzeug ermöglicht. Frei auskragend an dem Fluggasttreppenfahrzeug 3 angelenkt ist nach einer ersten Ausführungsform die mit 10 bezeichnete Ladefläche (Fig. 1 bis Fig. 3). Die Ladefläche 10 nimmt die mit 12 bezeichnete Schutzeinrichtung auf, die mehrere Tunnelelemente 15 umfasst. Die Tunnelelemente 15, die konisch ausgebildet sind, können insofern teleskopartig ineinander gelagert auf der Ladefläche 10 angeordnet sein. Mithilfe der insgesamt mit 20 bezeichneten Hubeinrichtung kann die Ladefläche 10 auf den Boden abgesenkt werden (Fig. 3), um dann die einzelnen Tunnelelemente 15 zur Bildung des Zugangstunnels auseinander zu fahren, wozu die einzelnen Tunnelelemente auf ihrer Unterseite Räder 15a aufweisen. Die Ladefläche 10 umfasst hierbei zwei parallel zueinander verlaufende Schienen.

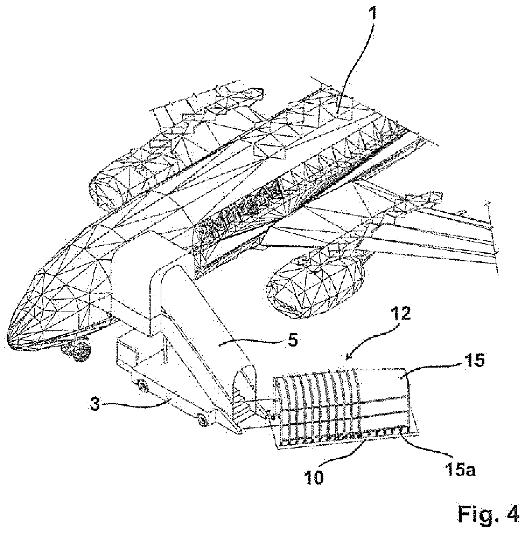

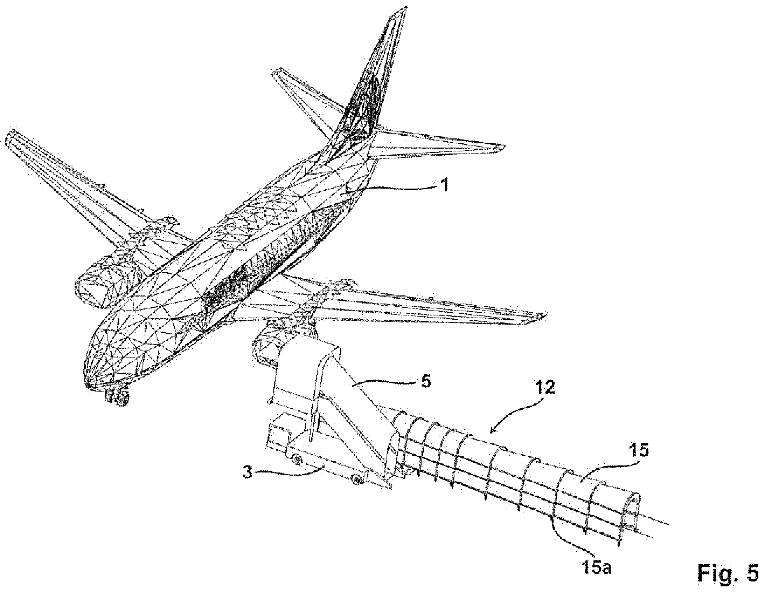

Als Variante zu der ersten Ausführungsform ist gemäß den Figuren 4 und 5 vorgesehen, dass die Ladefläche 10 an dem Fluggasttreppenfahrzeug 3 horizontal verschwenkbar angelenkt ist, sodass diese sich, wie in Fig. 5 dargestellt, nach Verschwenkung um 180° seitlich parallel zum Fluggasttreppenfahrzeug 3 befindet. In dieser Stellung wird dann die Ladefläche, die vollflächig abgebildet ist, abgesenkt, um die darauf befindlichen Tunnelelemente 15 zur Bildung des Zugangstunnels, beispielsweise zu einem Flughafenbus, auseinanderziehen zu können. Die Tunnelelemente sind auch hier, wie bereits zuvor erläutert, konisch ausgebildet und verfügen über Räder 15a.

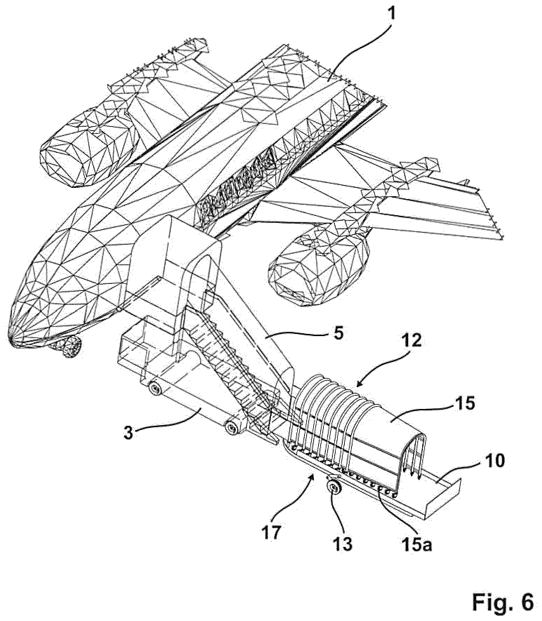

Bei der zweiten Ausführungsform gemäß Fig. 6 ist am Fluggasttreppenfahrzeug 3 ein Anhänger 17 angehängt, wobei der Anhänger 17 die Ladefläche 10 und das Fahrgestell 13 umfasst, wobei das Fahrgestell 13 absenkbar ausgebildet ist, sodass die Ladefläche 10 des Anhängers zumindest mit dem hinteren Ende auf dem Boden aufstehen kann, um die einzelnen Tunnelelemente 15 der Schutzeinrichtung 12 von der Ladefläche 10 verfahren zu können, wie dies bei der bereits abgehandelten Ausführungsform erläutert worden ist.

Um die einzelnen Tunnelelemente von der Ladefläche zur Bildung des Zugangstunnels auseinanderziehen zu können, ist vorteilhaft das vordere Tunnelelement auf der Ladefläche fixiert, beispielsweise durch Blockade der Räder 15a des Tunnelelements, das der Fluggasttreppe 5 unmittelbar zugewandt ist.

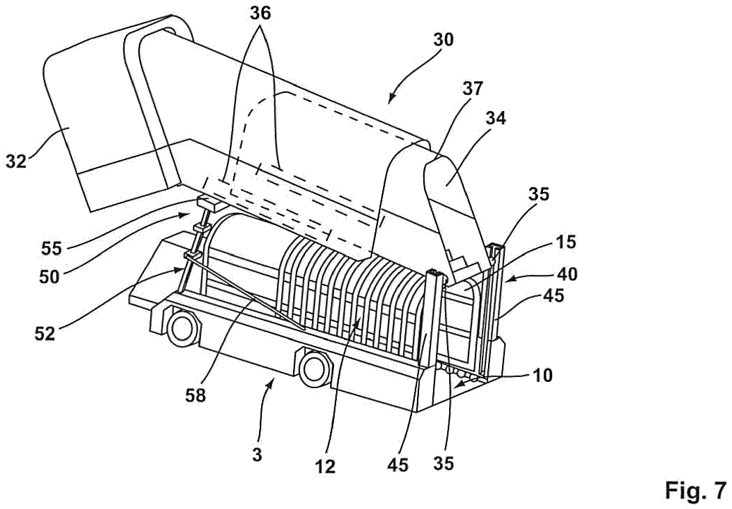

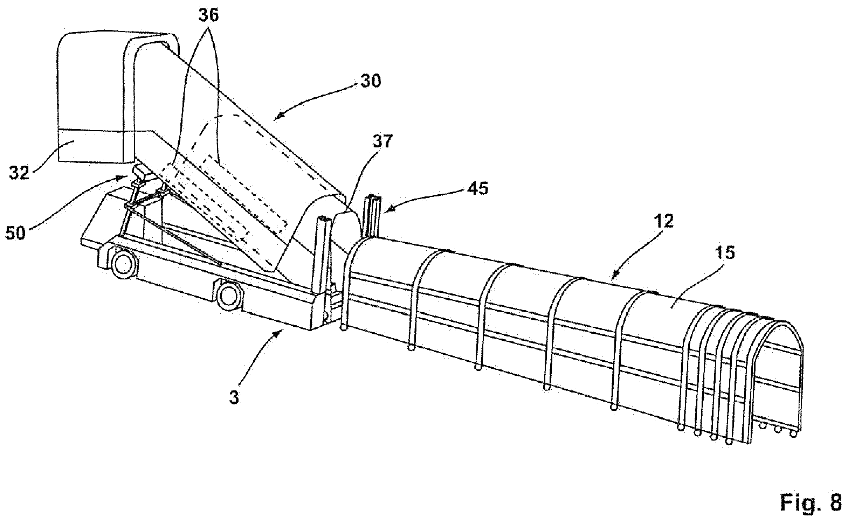

Das mit 3 bezeichnete Fluggasttreppenfahrzeug umfasst nach der dritten Ausführungsform gemäß den Figuren 7 und 8 ebenfalls eine insbesondere absenkbare Ladefläche 10 zur Aufnahme der Schutzeinrichtung 12, umfassend eine Mehrzahl von Tunnelelementen 15. Das Fluggasttreppenfahrzeug 3 weist am hinteren Ende eine Hubvorrichtung 40 auf, wobei die Hubvorrichtung 40 zwei beabstandet zueinander angeordnete Hubsäulen 45 umfasst, die der Führung des hinteren, zugangsseitigen Endes der mit 30 bezeichneten Treppeneinrichtung dienen. Zur Aufnahme der Treppeneinrichtung 30 weist das Anschlusstreppensegment 34 zu beiden Seiten jeweils einen Nocken 35 auf, wobei ein jeder Nocken 35 durch eine Hubsäule 45 geführt ist. Zur Aufnahme des entsprechenden Nocken 35 ist die Hubsäule im Querschnitt etwa C-profilförmig ausgebildet. Das Anheben der Treppeneinrichtung 30 im hinteren Endbereich des Fahrzeugs kann z. B. durch Kolbenzylinderantriebe entweder hydraulisch oder pneumatisch bewirkt werden oder auch beispielsweise durch jeweils einen in jeder Hubsäule 45 angeordneten Kettentrieb.

Das Fluggasttreppenfahrzeug 3 weist des Weiteren im vorderen Ende den Bock 50 zur Lagerung des vorderen Endes der Treppeneinrichtung 30 auf. Der Bock 50 umfasst zu beiden Seiten des Fluggasttreppenfahrzeugs 3 angeordnete in der Länge veränderbare Teleskopstützen 52, die am oberen Ende durch eine Traverse 55 miteinander in Verbindung stehen. Die Traverse ist hierbei um eine horizontale Achse verschwenkbar an den Teleskopstützen gelagert. Auf der Traverse 55 liegt das vordere Ende der Treppeneinrichtung 30 auf. Die Teleskopstützen 52 weisen jeweils einen Stützarm 58 auf, der an einem Ende am Fluggasttreppenfahrzeug 3 angeordnet ist, und am anderen Ende an der Teleskopstütze 52. Die mit Treppen versehene Treppeneinrichtung 30, die getunnelt ist, weist das Anschlusstreppensegment 34 auf, dass ebenfalls Treppenstufen besitzt und gleichfalls getunnelt ist. In der Treppeneinrichtung ist das Anschlusstreppensegment 34 teleskopierbar gelagert. Das heißt, dass hierdurch die Treppeneinrichtung zur Anpassung an unterschiedliche Flugzeughöhen in der Länge veränderbar ist. Die Längenveränderung der Treppeneinrichtung wird hierbei durch Höhenverstellung des Bocks und/oder durch das Teleskopieren des Anschlusstreppensegments aus der Treppeneinrichtung heraus oder in diese herein bewirkt. Das Anschlusstreppensegment 34 zeigt darüber hinaus einen im abgesenkten Zustand der Treppeneinrichtung 30 im Wesentlichen lotrecht ausgerichteten Anschlussrahmen 37, der der Verbindung mit einem entsprechenden Rahmen eines Tunnelelementes 15 dient.

Am vorderen Ende dem Flugzeug zugewandten Ende weist die Treppeneinrichtung 30 das Kuppelmodul 32 auf, das an seinem freien Ende ein nicht dargestelltes Faltenvordach aufweisen kann.

Die Funktionsweise des erfindungsgemäßen Fluggasttreppenfahrzeugs 3 stellt sich nun wie folgt dar. In dem in Fig. 7 dargestellten Zustand wird das Fluggasttreppenfahrzeug 3 an das Flugzeug herangefahren. Alsdann wird die Schutzeinrichtung 12 mit den einzelnen Tunnelelementen von der Ladefläche 10 des Fluggasttreppenfahrzeugs 3 herausgezogen. Hierzu kann die Ladefläche gegebenenfalls abgesenkt werden. Ist dies geschehen, so wird die Treppeneinrichtung 30 am hinteren Ende, also im Bereich des Anschlusstreppensegments an den beiden Hubsäulen 45 abgesenkt, bis eine Stellung gemäß Fig. 8 erreicht ist. Alsdann kann das vordere Ende der Treppeneinrichtung 30 mit dem Kuppelmodul 32 mithilfe der Teleskopstützen 52 des Bockes 50 so weit angehoben werden, bis das Kuppelmodul 32 den Zugangsbereich des Flugzeugs erreicht. Sollte die zum Erreichen des Zugangs des Flugzeugs erforderliche Höhe durch die Treppeneinrichtung nicht erreichbar sein, so kann durch die Teleskopierbarkeit des Anschlusstreppensegments 34 der Treppeneinrichtung 30 die erforderliche Länge bereitgestellt werden. Das Auseinanderfahren des Anschlusstreppensegments 34 aus der Treppeneinrichtung 30 kann durch einen zwischen Treppeneinrichtung und Anschlusstreppensegment angeordneten Zahnstangentrieb oder Kettentrieb 36 bewerkstelligt werden. Alternativ kann sich ein solcher Zahnstangen- oder Kettentrieb auch zwischen der Traverse und der Treppeneinrichtung befinden. Um zu gewährleisten, dass die Traverse 55 an der Unterseite der Treppeneinrichtung vollflächig anliegen kann, wenn der Bock 50 in der Höhe verstellt wird, ist vorgesehen, dass die Traverse an eine horizontale Achse verschwenkbar mit den Teleskopstützen verbunden ist.

### Bezugszeichenliste:

- 1: Flugzeug
- 3: Fluggasttreppenfahrzeug
- 5: Fluggasttreppe
- 10: Ladefläche
- 12: Schutzeinrichtung
- 13: Fahrgestell
- 15: Tunnelelement
- 15a: Räder
- 17: Anhänger
- 20: Hubeinrichtung
- 30: Treppeneinrichtung
- 32: Kuppelmodul
- 34: Anschlusssegment
- 35: Nocken
- 36: Kettentrieb/Zahnstangentrieb
- 37: Anschlussrahmen
- 40: Hubvorrichtung
- 45: Hubsäule
- 50: Bock
- 52: Teleskopstützen
- 55: Traverse
- 58: Stützarm

## Patentansprüche

1. Zugangseinrichtung zu einem Flugzeug (1), Bus oder Gebäude, umfassend ein Fahrzeug sowie eine mit dem Fahrzeug verbundene Ladefläche (10), wobei auf der Ladefläche (10) eine Schutzeinrichtung (12) für Passagiere angeordnet ist,
wobei die Schutzeinrichtung (12) mehrere verfahrbare, teleskopartig ineinander lagerbare Tunnelelemente (15) umfasst, die auf der Ladefläche (10) transportierbar und von der Ladefläche (10) verfahrbar sind,
**dadurch gekennzeichnet,**
**dass** die Tunnelelemente (15) konisch ausgebildet sind.

2. Zugangseinrichtung zu einem Flugzeug (1), Bus oder Gebäude nach Anspruch 1, wobei das Fahrzeug als Fluggasttreppenfahrzeug (3) ausgebildet ist.

3. Zugangseinrichtung zu einem Flugzeug (1), Bus oder Gebäude nach Anspruch 1 oder 2, wobei die Tunnelelemente (15) zur Verfahrbarkeit Rollen (15a) aufweisen.

4. Zugangseinrichtung zu einem Flugzeug (1), Bus oder Gebäude nach einem der voranstehenden Ansprüche, wobei die Ladefläche (10) an dem Fahrzeug horizontal verschwenkbar anbringbar ist.

5. Zugangseinrichtung zu einem Flugzeug (1), Bus oder Gebäude nach Anspruch 4, wobei die Ladefläche (10) um 180° verschwenkbar an dem Fahrzeug anbringbar ist.

6. Zugangseinrichtung zu einem Flugzeug (1), Bus oder Gebäude nach einem der voranstehenden Ansprüche, wobei die Ladefläche (10) absenkbar ist.

7. Zugangseinrichtung zu einem Flugzeug (1), Bus oder Gebäude nach einem der voranstehenden Ansprüche, wobei die Ladefläche (10) frei auskragend an dem Fahrzeug angeordnet ist.

8. Zugangseinrichtung zu einem Flugzeug (1), Bus oder Gebäude nach Anspruch 7, wobei die frei auskragende Ladefläche (10) durch eine Hubeinrichtung (20) absenkbar ist.

9. Zugangseinrichtung zu einem Flugzeug (1), Bus oder Gebäude nach einem der voranstehenden Ansprüche, wobei die Ladefläche (10) ein Fahrgestell (12) aufweist.

10. Zugangseinrichtung zu einem Flugzeug (1), Bus oder Gebäude nach Anspruch 9, wobei das Fahrgestell (12) die Ladefläche (10) absenkbar aufnimmt.

11. Zugangseinrichtung zu einem Flugzeug (1), Bus oder Gebäude nach einem der voranstehenden Ansprüche, wobei das vordere Tunnelelement (15) auf der Ladefläche (10) fixierbar ist.

12. Zugangseinrichtung zu einem Flugzeug (1), Bus oder Gebäude nach einem der voranstehenden Ansprüche 2 bis 11, wobei das Fluggasttreppenfahrzeug (3) eine Treppeneinrichtung (30) aufweist, wobei die Treppeneinrichtung (30) unter Schaffung eines Freiraums über der Ladefläche (10) des Fluggasttreppenfahrzeugs (3) zumindest an einem Ende in der Höhe durch eine Hubvorrichtung (40) verstellbar ist.

13. Zugangseinrichtung zu einem Flugzeug (1), Bus oder Gebäude nach Anspruch 12, wobei die Hubvorrichtung (40) am hinteren Ende des Fluggasttreppenfahrzeugs (3) angeordnet ist.

14. Zugangseinrichtung zu einem Flugzeug (1), Bus oder Gebäude nach Anspruch 12 oder 13, wobei die Treppeneinrichtung (30) im Bereich des vorderen Endes des Fluggasttreppenfahrzeugs (3) auf einem Bock (50) aufsitzt, wobei auf dem Bock (50) die Treppeneinrichtung (30) verschieblich angeordnet ist, wobei der Bock (50) in der Höhe verstellbar ist.

15. Zugangseinrichtung zu einem Flugzeug (1), Bus oder Gebäude nach einem der Ansprüche 12 bis 14, wobei die Treppeneinrichtung (30) im Bereich des hinteren Endes im abgesenkten Zustand des hinteren Bereichs der Treppeneinrichtung (30) einen im Wesentlichen lotrechten Anschlussrahmen (37) aufweist.

16. Zugangseinrichtung zu einem Flugzeug (1), Bus oder Gebäude nach Anspruch 15, wobei die Treppeneinrichtung (30) im hinteren absenkbaren Endbereich ein Anschlusstreppensegment (34) aufweist, wobei die Treppeneinrichtung das Anschlusstreppensegment (34) teleskopierbar aufnimmt.

17. Zugangseinrichtung zu einem Flugzeug (1), Bus oder Gebäude nach einem der Ansprüche 15 oder 16, wobei die Treppeneinrichtung (30) und/oder das Anschlusstreppensegment (34) getunnelt ist.

18. Zugangseinrichtung zu einem Flugzeug (1), Bus oder Gebäude nach einem der Ansprüche 12 bis 17, wobei die Hubvorrichtung (40) zwei Hubsäulen (45) umfasst, durch die die Treppeneinrichtung (30) in der Höhe verstellbar verschieblich geführt ist.

## Claims

1. An access device to an aircraft (1), bus or building, comprising a vehicle as well as a loading surface (10) connected to the vehicle, wherein a protection device (12) for passengers is arranged on the loading area (10),
wherein the protection device (12) includes several displaceable tunnel elements (15) which can be telescopically mounted one inside the other and which can be transported on the loading surface (10) and displaced from the loading surface (10),
**characterised in that**
the tunnel elements (15) are formed conically.

2. The access device to an aircraft (1), bus or building according to claim 1,
wherein
the vehicle is designed as a passenger boarding stair vehicle (3).

3. The access device to an aircraft (1), bus or building according to claim 1 or 2, wherein
the tunnel elements (15) have rollers (15a) for displaceability.

4. The access device to an aircraft (1), bus or building according to one of the aforementioned claims,
wherein
the loading surface (10) can be attached to the vehicle in a horizontally pivotable manner.

5. The access device to an aircraft (1), bus or building according to claim 4,
wherein
the loading surface (10) is attachable to the vehicle so as to be pivotable by 180°.

6. The access device to an aircraft (1), bus or building according to one of the aforementioned claims,
wherein
the loading surface (10) can be lowered.

7. The access device to an aircraft (1), bus or building according to one of the aforementioned claims,
wherein
the loading surface (10) is arranged in a freely projecting manner on the vehicle.

8. The access device to an aircraft (1), bus or building according to claim 7, wherein
the freely projecting loading surface (10) can be lowered by a lifting device (20).

9. The access device to an aircraft (1), bus or building according to one of the aforementioned claims,
wherein
the loading surface (10) has an undercarriage (12).

10. The access device to an aircraft (1), bus or building according to claim 9,
wherein
the undercarriage (12) receives the loading surface (10) in a lowerable manner.

11. The access device to an aircraft (1), bus or building according to one of the aforementioned claims,
wherein
the front tunnel element (15) can be fixed on the loading surface (10).

12. The access device to an aircraft (1), bus or building according to one of the aforementioned claims 2 to 11,
wherein
the passenger boarding stair vehicle (3) has a stair arrangement (30), wherein the stair arrangement (30) is adjustable in height by means of a lifting device (40) at least at one end while creating a free space above the loading surface (10) of the passenger boarding stair vehicle (3).

13. The access device to an aircraft (1), bus or building according to claim 12,
wherein
the lifting device (40) is arranged at the rear end of the passenger boarding stair vehicle (3).

14. The access device to an aircraft (1), bus or building according to claim 12 or 13,
wherein
the stair arrangement (30) rests on a support (50) in the region of the front end of the passenger boarding stair vehicle (3), wherein the stair arrangement (30) is displaceably arranged on the support (50), wherein the support (50) is adjustable in height.

15. The access device to an aircraft (1), bus or building according to one of the claims 12 to 14,
wherein
the stair arrangement (30) has a substantially vertical connecting frame (37) in the region of the rear end in the lowered state of the rear region of the stair arrangement (30).

16. The access device to an aircraft (1), bus or building according to claim 15,
wherein
the stair arrangement (30) has a connecting stair segment (34) in the rear lowerable end region, wherein the stair arrangement telescopically receives the connecting stair segment (34).

17. The access device to an aircraft (1), bus or building according to one of the claims 15 or 16,
wherein
the stair arrangement (30) and/or the connecting stair segment (34) is tunnelled.

18. The access device to an aircraft (1), bus or building according to one of the claims 12 to 17,
wherein
the lifting device (40) comprises two lifting columns (45) by which the stair arrangement (30) is guided so as to be adjustable in height.

## Revendications

1. Dispositif d'accès à un avion (1), un bus ou un bâtiment, comprenant un véhicule ainsi qu'une surface de chargement (10) reliée au véhicule, où un dispositif de protection (12) pour les passagers est disposé sur la surface de chargement (10),
où le dispositif de protection (12) comprend une pluralité d'éléments de tunnel (15) déplaçables qui peuvent être stockés de manière télescopiquement encastrée les uns dans les autres et qui peuvent être transportés sur la surface de chargement (10) et déplacés à partir de la surface de chargement (10), **caractérisé en ce que**
les éléments de tunnel (15) sont de forme conique.

2. Dispositif d'accès à un avion (1), bus ou bâtiment selon la revendication 1,
où
le véhicule est conçu comme un véhicule à escalier d'embarquement de passagers (3).

3. Dispositif d'accès à un avion (1), un bus ou un bâtiment selon la revendication 1 ou 2,
où
les éléments de tunnel (15) comportent des roulettes (15a) permettant leur déplacement.

4. Dispositif d'accès à un avion (1), un bus ou un bâtiment selon l'une des revendications précédentes,
où
la surface de chargement (10) peut être attachée au véhicule de manière à pouvoir pivoter horizontalement.

5. Dispositif d'accès à un avion (1), un bus ou un bâtiment selon la revendication 4,
où
la surface de chargement (10) peut être attachée au véhicule de manière à pouvoir pivoter de 180°.

6. Dispositif d'accès à un avion (1), un bus ou un bâtiment selon l'une des revendications précédentes,
où
la surface de chargement (10) peut être abaissée.

7. Dispositif d'accès à un avion (1), un bus ou un bâtiment selon l'une des revendications précédentes,
où
la surface de chargement (10) est disposée en saillie libre sur le véhicule.

8. Dispositif d'accès à un avion (1), un bus ou un bâtiment selon la revendication 7,
où
la surface de chargement (10) en saillie libre peut être abaissée par un dispositif de levage (20).

9. Dispositif d'accès à un avion (1), un bus ou un bâtiment selon l'une des revendications précédentes,
où
la surface de chargement (10) comporte un châssis (12).

10. Dispositif d'accès à un avion (1), un bus ou un bâtiment selon la revendication 9,
où
le châssis (12) reçoit la surface de chargement (10) de manière abaissable.

11. Dispositif d'accès à un avion (1), un bus ou un bâtiment selon l'une des revendications précédentes,
où
l'élément de tunnel avant (15) peut être fixé sur la surface de chargement (10).

12. Dispositif d'accès à un avion (1), un bus ou un bâtiment selon l'une des revendications 2 à 11 précédentes,
où
le véhicule à escalier d'embarquement de passagers (3) comporte un dispositif d'escalier (30), où le dispositif d'escalier (30) est réglable en hauteur par un dispositif de levage (40) au moins à une extrémité tout en créant un espace libre au-dessus de la surface de chargement (10) du véhicule à escalier d'embarquement de passagers (3).

13. Dispositif d'accès à un avion (1), un bus ou un bâtiment selon la revendication 12,
où
le dispositif de levage (40) est disposé à l'extrémité arrière du véhicule à escalier d'embarquement de passagers (3).

14. Dispositif d'accès à un avion (1), un bus ou un bâtiment selon la revendication 12 ou 13,
où
le dispositif d'escalier (30) est placé sur un support (50) dans la région de l'extrémité avant du véhicule à escalier de passagers (3), où le dispositif d'escalier (30) est disposé de manière déplaçable sur le support (50), où le support (50) est réglable en hauteur.

15. Dispositif d'accès à un avion (1), un bus ou un bâtiment selon l'une des revendications 12 à 14,
où
le dispositif d'escalier (30) comporte un cadre de raccordement (37) sensiblement vertical dans la région de l'extrémité arrière à l'état abaissé de la région arrière du dispositif d'escalier (30).

16. Dispositif d'accès à un avion (1), un bus ou un bâtiment selon la revendication 15,
où
le dispositif d'escalier (30) présente un segment d'escalier de raccordement (34) dans la région d'extrémité arrière abaissable, où le dispositif d'escalier reçoit le segment d'escalier de raccordement (34) de manière télescopique.

17. Dispositif d'accès à un avion (1), à un bus ou à un bâtiment selon l'une des revendications 15 ou 16,
où
le dispositif d'escalier (30) et/ou le segment d'escalier de raccordement (34) est tunnelisé.

18. Dispositif d'accès à un avion (1), un bus ou un bâtiment selon l'une des revendications 12 à 17,
où
le dispositif de levage (40) comprend deux colonnes de levage (45) par lesquelles le dispositif d'escalier (30) est guidé de manière à pouvoir être réglé en hauteur.
